# EUROPÄISCHE PATENTSCHRIFT

(11) **EP 0 658 765 B1**
(45) Veröffentlichungstag und Bekanntmachung des Hinweises auf die Patenterteilung: **15.04.1998**
(21) Anmeldenummer: 94119665.1
(22) Anmeldetag: 13.12.1994
(51) Int. Cl.: G01N 29/02, E06B 3/677

(54) **Verfahren und Vorrichtung zum Feststellen des Zeitpunktes, zu welchem Luft aus einer Isolierglasscheibe durch ein von Luft verschiedenes Gas verdrängt ist**
Method and device for determining the end of the replacement of air by another gas in insulating glazing
Méthode et appareil pour déterminer la fin du remplacement de l'air par un gaz différent dans un vitrage isolant

(30) Priorität: 13.12.1993 DE 4342450
(43) Veröffentlichungstag der Anmeldung: 21.06.1995
(73) Patentinhaber: Lenhardt Maschinenbau GmbH, D-75242 Neuhausen (DE)
(72) Erfinder: Bogner, Uwe, D-75181 Pforzheim-Hohenwart (DE)
(74) Vertreter: Twelmeier, Ulrich, Dipl.Phys.

(56) Entgegenhaltungen:
- EP-A- 0 180 068
- DE-A- 2 644 851
- US-A- 3 434 334
- US-A- 4 083 387
- US-A- 4 997 013
- DATABASE WPI Week 8545, Derwent Publications Ltd., London, GB; AN 85-282245 & SU-A-1 155 856 (ARGANOVSKI ET AL) 15. Mai 1985
- PATENT ABSTRACTS OF JAPAN vol. 9, no. 13 (P-328) 19. Januar 1985 & JP-A-59 160 752 (FUIGARO GIKEN KK)

## Beschreibung

Die Erfindung geht aus von einem Verfahren mit den im Oberbegriff des Anspruchs 1 angegebenen Merkmalen.

Es ist bekannt, Isolierglasscheiben zur Verbesserung der Wärmedämmung und der Schalldämmung mit einem Gas zu füllen, welches spezifisch schwerer ist als Luft (Schwergas), insbesondere mit Argon oder mit Schwefelhexafluorid SF₆ . Dabei geht man üblicherweise so vor, dass man die Isolierglasscheiben zunächst in Luft zusammenbaut und dann durch noch verbliebene Öffnungen oder durch nachträglich in den Abstandhalter zwischen den Glastafeln der Isolierglasscheibe eingebrachte Öffnungen einen Gasaustausch vornimmt, indem man z.B. durch eine erste Öffnung das Schwergas in den Innenraum der Isolierglasscheibe einleitet und dadurch gleichzeitig die Luft aus dem Innenraum durch eine andere Öffnung verdrängt, wobei der Verdrängungsprozeß durch ein Absauggebläse unterstützt werden kann.

Dabei ist man bestrebt, einen möglichst vollständigen Gasaustausch vorzunehmen, weil in der Isolierglasscheibe verbliebene Restmengen an Luft der angestrebten Verbesserung der Wärmedämmung und der Schalldämmung entgegenstehen. Andererseits ist der Schwergasverbrauch ein wesentlicher Kostenfaktor in der Isolierglasherstellung, so dass man bestrebt ist, nicht mehr Schwergas als unbedingt nötig in die Isolierglasscheiben einzufüllen, zumal die Rückgewinnung von im Überschuß in die Isolierglasscheiben eingefülltem Schwergas erst recht unwirtschaftlich ist. Es ist deshalb üblich, dass man den aus der Isolierglasscheibe verdrängten Gasstrom ganz oder teilweise über einen Meßfühler leitet, um festzustellen, wann das eingeleitete Schwergas die Luft aus der Isolierglasscheibe verdrängt hat (EP-B-0 046 847). Als Meßfühler sind durchweg solche im Einsatz, welche sich die Tatsache zunutze machen, dass Schwergase eine schlechtere Wärmeleitfähigkeit als Luft haben, denn aus diesem Grunde wird ja Schwergas in Isolierglasscheiben eingefüllt. Man läßt den verdrängten Gasstrom deshalb an einem beheizten elektrischen Widerstandselement vorbeistreichen, dessen Temperatur sich bei konstanter Heizleistung durch die vorbeiströmende Luft auf einen bestimmten Wert stabilisiert. Kommt statt Luft schließlich Schwergas, dann steigt wegen der geringeren Wärmeleitfähigkeit des Schwergases die Temperatur des beheizten Widerstandselementes an und weil der elektrische Widerstand temperaturabhängig ist, ändert sich der elektrische Widerstand, was durch eine einfache Meßschaltung gemessen und signalisiert werden kann. Nachteilig dabei ist, dass diese Meßfühler träge reagieren, d.h., dass von der Ankunft der Schwergasströmung über die dann einsetzende allmähliche Temperatursteigerung des Widerstandselementes bis zum Anzeigen eines deutlich veränderten Widerstandswertes eine geraume Zeitspanne verstreicht, in welcher Schwergas ungenutzt verlorengeht.

Der vorliegenden Erfindung liegt die Aufgabe zugrunde, eine Möglichkeit aufzuzeigen, wie man den Zeitpunkt, zu dem das eingeleitete Schwergas die Luft aus der Isolierglasscheibe im wesentlichen verdrängt hat,früher und genauer feststellen kann, um dadurch den überflüssigen Schwergasverbrauch verringern zu können.

Diese Aufgabe wird gelöst durch das Verfahren mit den im Anspruch 1 angegebenen Merkmalen. Eine zum Durchführen des Verfahrens besonders geeignete Vorrichtung ist Gegenstand des Anspruchs 6. Vorteilhafte Weiterbildungen der Erfindung sind Gegenstand der abhängigen Ansprüche.

Die Erfindung macht sich nicht die Abhängigkeit der Wärmeleitfähigkeit von der Art des Gases, sondern eine andere bekannte physikalische Eigenschaft von Gasen zu nutzen, nämlich die Abhängigkeit der Schallgeschwindigkeit von der Art des Gases; je höher das Molekulargewicht eines Gases ist, desto niedriger ist die Schallgeschwindigkeit in dem Gas. Erfindungsgemäss wird aber nicht unmittelbar die Schallgeschwindigkeit gemessen, sondern die Tonhöhe, die mit der Schallgeschwindigkeit absinkt, wenn man dafür sorgt, dass die Wellenlänge der akustischen Schwingung gleich bleibt. Wendet man dieses Prinzip an, um den Füllvorgang beim Füllen einer Isolierglasscheibe mit einem Schwergas zu überwachen, dann stellt man fest, dass die Tonhöhe einer akustischen Schwingung, die in dem die Isolierglasscheibe verlassenden Gasstrom erzeugt wird, zunächst konstant bleibt, solange nur Luft verdrängt wird, und dass die Tonhöhe absinkt, sobald auch Schwergas die Isolierglasscheibe verläßt, und sich dann auf einem tieferem Niveau stabilisiert, wenn die Luft verdrängt ist und praktisch nur noch Schwergas aus der Isolierglasscheibe herausströmt. Spätestens dann ist der richtige Zeitpunkt gekommen, das weitere Einleiten von Schwergas in die Isolierglasscheibe zu stoppen und die Isolierglasscheibe zu verschließen.

Es ist der große Vorteil des erfindungsgemässen Verfahrens, dass das Auftauchen von Schwergas in dem die Isolierglasscheibe verlassenden Gasstrom ohne wesentliche Verzögerung erkannt werden kann, da verzögernde Einflüsse wie etwa die Wärmeleitung im Gas und die Wärmekapazität des Meßfühlers ausgeschaltet sind. Vielmehr ändert sich die Schallgeschwindigkeit und damit die Tonhöhe durch Änderung der Gasart ohne jegliche Verzögerung. Die einzige Verzögerung,die bei Anwendung der Erfindung noch eine Rolle spielt, ergibt sich daraus, dass man ein gewisses Volumen des Gases benötigt, um darin eine akustische Schwingung anregen zu können, und dass dieses Volumen von der öffnung in der Isolierglasscheibe, aus welcher der Gasstrom austritt, bis zum Meßort transportiert werden muss. Die dadurch bedingte Verzögerung kann aber gering gehalten werden, indem man das Leitungsvolumen von der Isolierglasscheibe bis zum Meßort klein hält, und in der Tat kann es klein gehalten werden verglichen mit dem Rauminhalt einer Isolierglasscheibe, so dass die unvermeidlichen Schwergasverluste daran gemessen in der Tat wesentlich kleiner gehalten werden können als bisher. Die erfindungsgemässe Art und Weise, das Austreten von Schwergas aus der Isolierglasscheibe zu erkennen, erlaubt deshalb einen wesentlich sparsameren Umfang mit dem Schwergas als die bisher verwendeten trägen Sensoren. Vorteilhaft ist ferner, daß erfindungsgemäße Sensoren nicht altern, auch bei Änderungen der Umgebungsbedingungen wie Feuchte und Temperatur ein zuverlässiges Signal abgeben und daß man für alle Arten von Schwergasen mit ein und demselben Sensor auskommt.

Ausser durch die Trägheit der Sensoren werden der Füllgrad und etwaige Schwergasverluste allerdings auch durch den Füllvorgang selbst beeinflußt, nämlich dadurch, an welcher Stelle einer Isolierglasscheibe das Schwergas eingeleitet und die Luft verdrängt wird. Die besten Ergebnisse erreicht man, wenn man den Gasaustausch bei hochkant stehenden Isolierglasscheiben vornimmt und das Schwergas durch eine öffnung am unteren Rand der Isolierglasscheibe einleitet und die Luft durch eine am oberen Rand vorgesehene öffnung verdrängt, denn dann erreicht man am ehesten, dass sich das Schwergas nicht mit der Luft vermischt, sondern das Schwergas die leichtere Luft unterschichtet und nach oben verdrängt. Die Tonhöhe, die beim ersten Auftauchen von Schwergas im verdrängten Gasstrom abzusinken beginnt, stabilisiert sich dann verhältnismässig rasch innerhalb weniger Senkunden auf tiefem Niveau und zeigt dadurch an, dass der Gasaustausch beendet ist. Der Übergang vom höheren Ton in Luft zum tieferen Ton im Schwergas hängt hinsichtlich seiner Zeitdauer von der Größe der jeweiligen Isolierglasscheibe ab. Ein typischer Wert für die Zeitdauer ist 2 bis 3 s.

Das Absinken der Tonhöhe kann von einer den Gasaustausch überwachenden Person leicht wahrgenommen werden; der Gasaustausch kann von der Bedienungsperson sofort von Hand beendet werden. Die Überwachung kann aber auch automatisiert werden mit Hilfe eines Mikrophons und eines einfachen Tonfrequenzanalysators, der bei Absinken der Tonfrequenz um ein vorgewähltes Maß ein Stellsignal an ein Magnetventil abgibt, welches in der Zuleitung von der Schwergasdruckflasche zur Isolierglasscheibe liegt.

Vorzugsweise führt man das erfindungsgemässe Verfahren mittels eines akustischen Hohlraumresonators durch, in welchem eine akustische Schwingung angeregt wird, deren Wellenlänge durch die Abmessungen des Hohlraums bestimmt ist. Durch diesen Hohlraum leitet man den Gasstrom, der aus der Isolierglasscheibe verdrängt wird, und regt währenddessen ständig eine akustische Schwingung in der Gasfüllung des Hohlraums an, wobei die Frequenz der Schwingung vorzugsweise durch ein mechanisches Stellglied, z.B. durch eine mittels einer Justierschraube verstellbare Wand des Hohlraum, abstimmbar ist. In diesen Hohlraum führt man den Abgasstrom durch eine Leitung hinein, welche mit einer Anschlußeinrichtung an die Öffnung der Isolierglasscheibe, aus aus welcher der Gasstrom austritt, anschließbar ist. Das Volumen dieser Leitung sollte nicht unnötig groß sein. Entsprechendes gilt für das Volumen des akustischen Hohlraumresonators. Es wird deshalb bevorzugt, die Länge des Hohlraums so zu bemessen, dass die Eigenfrequenz, mit welcher die Gassäule im Hohlraum schwingen kann, mindestens 1000 Hz, noch besser mindestens 1500 Hz beträgt, aber jedenfalls im gut hörbaren Bereich liegt.

Im einfachsten Fall genügt als Hohlraumresonator eine einfache Pfeife, die von dem Gasstrom durchströmt wird und in üblicher Weise das Labium der Pfeife und mit ihm die Gassäule in der Pfeife zum Schwingen anregt. Der erfindungsgemässe Sensor ist damit nicht nur sehr wirkungsvoll, sondern gleichzeitig äußerst einfach und verschleißfest.

Will man die Überwachung der Tonhöhe automatisieren, dann baut man die Pfeife vorzugsweise in eine Kammer ein, in welcher gegen Beeinflussungen von aussen geschützt ein kleines Mikrophon untergebracht ist, welches den Ton der Pfeife empfängt, in ein elektrisches Signal mit entsprechender Frequenz umwandelt und an eine elektronische Auswerteschaltung weiterleitet, welche die Frequenz analysiert und das Absinken der Frequenz bzw. das Stabilisieren der Frequenz auf einem niedrigeren Niveau signalisiert. Damit in der Kammer nicht störende Frequenzen angeregt werden, ist sie zweckmässigerweise mit einem Schalldämm-Material ausgekleidet, insbesondere mit Steinwolle angefüllt, welche einerseits hinreichend schalldämmend ist, auf der anderen Seite das Ausströmen des untersuchten Gases nicht verhindert.

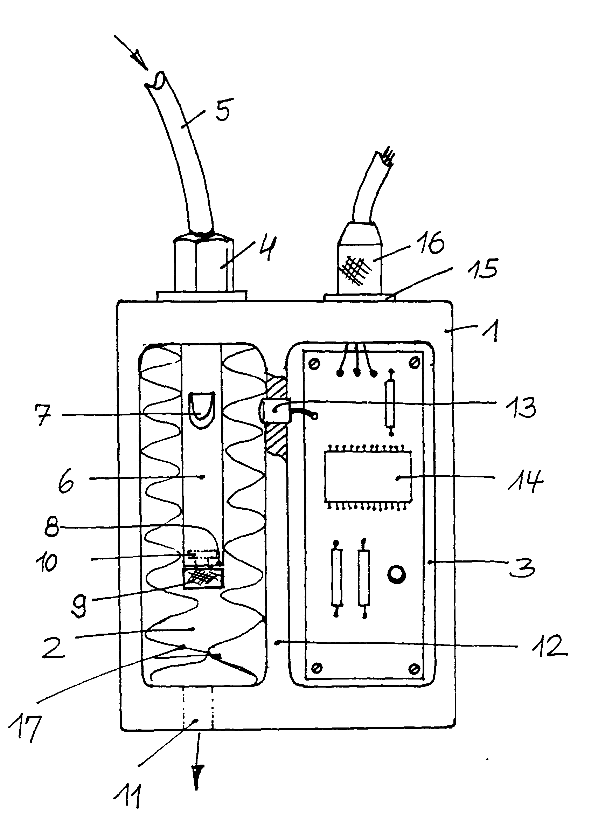

Ein Ausführungsbeispiel einer erfindungsgemässen Meßeinrichtung ist in der beigefügten Zeichnung schematisch dargestellt.

Die Zeichnung zeigt ein Gehäuse 1 mit abgenommenem Deckel, wodurch zwei Kammern 2 und 3 offengelegt sind. Die eine Kammer hat einen Einlaßstutzen 4, in den eine Leitung 5 hineinführt, welche dazu dient, den aus einer Isolierglasscheibe austretenden Gasstrom heranzuführen. In der Kammer 2 befindet sich eine Pfeife 6 mit Labium 7 und geschlossenem Ende 8. Der durch die Leitung 5 herangeführte Gasstrom führt unmittelbar in die Pfeife 6 hinein und verläßt sie durch die öffnung im Bereich des Labiums 7. Um die Tonhöhe der Pfeife abstimmen zu können, befindet sich am äußeren Ende der Pfeife 6 eine Rändelschraube 9, durch deren Drehung ein im Innern der Pfeife 6 befindlicher Stempel 10 hinsichtlich seines Abstandes vom hinteren Ende 8 der Pfeife justiert werden kann. Die Kammer 2 ist mit Steinwolle oder dergleichen durchlässigem Schalldämm-Material angefüllt. Dem Stutzen 4 gegenüberliegend ist ein Auslaß 11 vorgesehen, durch den das Gas ins Freie treten kann.

In einer Trennwand 12 zwischen den beiden Kammern 2 und 3 ist ein Mikrophon 13 eingebaut, dessen Ausgang mit einer nicht im einzelnen dargestellten Auswerteschaltung 14 verbunden ist, zu deren Aufnahme die Kammer 3 dient. Zur Stromversorgung der Auswerteschaltung und zum Herausführen eines Stellsignals oder Steuersignals zum Unterbrechen des Schwergasstromes ist am Gehäuse 1 eine Steckbuchse 15 vorgesehen, welche mit einem elektrischen Kabelstecker 16 verbunden werden kann.

Eine geeignete Frequenz, auf die die Pfeife abstimmbar ist, ist 2000 Hz in Luft. Wird Luft durch Argon ersetzt, sinkt die Tonhöhe um gut eine Tonstufe ab. Wird Luft durch Schwefelhexafluorid ersetzt, das schwerste der heute verwendeten Gase, dann sinkt die Tonhöhe sogar um ungefähr eine Oktave ab.

## Patentansprüche

1. Verfahren zum Feststellen des Zeitpunktes, zu welchem ein von Luft verschiedenes Gas, welches spezifisch schwerer ist als Luft und durch eine an einer ersten Stelle einer mit Luft gefüllten Isolierglasscheibe gelegene Öffnung in die Isolierglasscheibe eingeleitet wird, die Luft durch eine an einer zweiten Stelle der Isolierglasscheibe gelegene Öffnung aus der Isolierglasscheibe verdrängt hat,
**dadurch gekennzeichnet,** dass man in dem die Isolierglasscheibe verlassenden Gasstrom eine akustische Schwingung von i.w. gleichbleibender Wellenlänge erzeugt und das Absinken der Tonhöhe beobachtet, welches eintritt, sobald die Schwingung statt in Luft in dem spezifisch schwererenGas auftritt.

2. Verfahren nach Anspruch 1, **dadurch gekennzeichnet,** dass man das Einleiten des spezifisch schwereren Gases beendet, sobald sich die Tonhöhe auf ihrem tieferen Niveau stabilisiert hat.

3. Verfahren nach Anspruch 1 oder 2, **dadurch gekennzeichnet,** dass man das Gas durch einen akustischen Hohlraumresonator hindurch verdrängt und dabei in dessen Gasfüllung die Schwingung anregt.

4. Verfahren nach Anspruch 3, **dadurch gekennzeichnet,** dass man das aus der Isolierglasscheibe verdrängte Gas durch eine Pfeife strömen läßt.

5. Verfahren nach einem der vorstehenden Ansprüche, **dadurch gekennzeichnet,** dass das Gas unten in die Isolierglasscheibe eingeleitet wird und die Luft durch eine oben gelegene Öffnung verdrängt.

6. Vorrichtung zum Durchführen des Verfahrens nach einem der vorstehenden Ansprüche, **gekennzeichnet durch** eine Leitung (5), welche an ihrem einen Ende eine Anschlußeinrichtung zum Anschließen der Leitung (5) an die an der zweiten Stelle der Isolierglasscheibe gelegene Öffnung hat, durch die die Luft verdrängt wird, und welche an ihrem anderen Ende in einen akustischen Hohlraumresonator (6) mündet, der so ausgebildet ist, daß der Gasstrom eine akustische Schwingung von i.w. gleichbleibender Wellenlänge erzeugt.

7. Vorrichtung nach Anspruch 6, **dadurch gekennzeichnet,** dass der Hohlraumresonator eine Pfeife (6) ist.

8. Vorrichtung nach Anspruch 6 oder 7, **dadurch gekennzeichnet,** dass ein Mikrophon (13) vorgesehen ist, dessen Ausgang mit dem Eingang einer Frequenzauswerteschaltung (14) verbunden ist.

9. Vorrichtung nach Anspruch 7 und 8, **dadurch gekennzeichnet,** dass die Pfeife (6) in einer mit Schalldämm-Material (17) ausgekleideten Kammer (2) angeordnet ist, in welchersich auch das Mikrophon (13) befindet.

10. Vorrichtung nach Anspruch 9, **dadurch gekennzeichnet,** dass die Kammer (2) als Dämm-Material (17) Steinwolle enthält.

11. Vorrichtung nach einem der Ansprüche 6 bis 10, **dadurch gekennzeichnet,** dass die Eigenfrequenz des Hohlraumresonators (6) durch ein mechanisches Stellglied (8, 9) veränderbar ist.

12. Vorrichtung nach einem der Ansprüche 6 bis 11, **dadurch gekennzeichnet,** dass der Hohlraumresonator (6) auf eine hörbare Eigenfrequenz in Luft von mindestens 1000 Hz abgestimmt ist.

13. Vorrichtung nach Anspruch 12, **dadurch gekennzeichnet,** dass der Hohlraumresonator (6) auf eine hörbare Eigenfrequenz in Luft von mindestens 1500 Hz abgestimmt ist.

## Claims

1. Method for determining the point in time at which a gas different from air, having a specific weight higher than air and being introduced into an insulating-glass pane filled with air, at a first position thereof, has displaced the air from said insulating-glass pane through an opening located at a second position of said insulating-glass pane,
**characterized** by the steps of producing in the gas flow, that leaves the insulating-glass pane, an acoustic vibration of substantially constant wavelength, and observing the drop in pitch encountered as soon as the vibration occurs no longer in air, but rather in the gas of higher specific weight.

2. Method according to claim 1, **characterized** in that the introduction of the gas of higher specific weight is ended as soon as the pitch has stabilized at its lower level.

3. Method according to claim 1 or claim 2, **characterized** in that the gas is displaced through an acoustic cavity resonator, whereby the vibration is excited in the latter's gas fill.

4. Method according to claim 3, **characterized** in that the gas displaced from the insulating-glass pane is passed through a whistle.

5. Method according to one of the preceding claims, **characterized** in that the gas is introduced into the insulating-glass pane at its bottom, and the air is displaced through an opening at its top.

6. Device for carrying out the method according to one of the preceding claims, **characterized** by a conduit (5), which carries on its one end connection means for connecting said conduit (5) with an opening through which the air is displaced and which is located at said second position of said insulating-glass pane, the other end of said conduit (5) opening into an acoustic cavity resonator (6), which latter is designed in such a way that the gas flow produces an acoustic vibration of substantially constant wavelength.

7. Device according to claim 6, **characterized** in that the cavity resonator is a whistle (6).

8. Device according to claim 6 or claim 7, **characterized** in that a microphone (13) is provided whose output is connected to the input of a frequency-evaluation circuit (14).

9. Device according to claim 7 and claim 8, **characterized** in that said whistle (6) is arranged in a chamber (2), which is lined with a sound-absorbing material (17) and which also contains said microphone (13).

10. Device according to claim 9, **characterized** in that said sound-absorbing material (17) contained in said chamber (12) is rock wool.

11. Device according to one of claims 6 to 10, **characterized** in that the natural frequency of said cavity resonator (6) can be varied by means of a mechanical regulating element (8. 9).

12. Device according to one of claims 6 to 11, **characterized** in that the cavity resonator (6) is tuned to an audible natural frequency in air of at least 1000 Hz.

13. Device according to one of claim 12, **characterized** in that the cavity resonator (6) is tuned to an audible natural frequency in air of at least 1500 Hz.

## Revendications

1. Procédé pour détecter le moment auquel un gaz différent de l'air, qui est spécifiquement plus lourd que l'air et qui est introduit via une entrée située à un premier endroit d'une vitre isolante remplie d'air, a chassé l'air hors de la vitre isolante via une ouverture située à un second endroit de la vitre isolante,
caractérisé en ce qu'on génère dans le courant de gaz quittant la vitre isolante, une vibration acoustique dont la longueur d'onde est essentiellement constante et on observe une diminution de la hauteur tonale qui intervient dès que la vibration apparaît dans le gaz spécifiquement plus lourd au lieu d'apparaître dans l'air.

2. Procédé selon la revendication 1, caractérisé en ce qu'on met fin à l'introduction du gaz spécifiquement plus lourd dès que la hauteur tonale s'est stabilisée à son niveau le plus bas.

3. Procédé selon la revendication 1 ou 2, caractérisé en ce qu'on chasse le gaz à travers une cavité acoustique résonnante et on génère en l'occurrence la vibration au cours du remplissage de cette dernière avec le gaz.

4. Procédé selon la revendication 3, caractérisé en ce qu'on laisse s'écouler à travers un sifflet le gaz chassé de la vitre isolante.

5. Procédé selon une quelconque des revendications précédentes, caractérisé en ce qu'on introduit le gaz en bas dans la vitre isolante et on chasse l'air via une ouverture située en haut.

6. Dispositif pour la mise en oeuvre du procédé selon l'une quelconque des revendications précédentes, caractérisé par un conduit (5) qui possède, à sa première extrémité, un mécanisme de raccord qui lui permet de raccorder le conduit (5) à l'ouverture située au second endroit de la vitre isolante, à travers laquelle l'air est chassé, et qui débouche à son autre extrémité dans une cavité acoustique résonnante (6) qui est réalisée de telle sorte que le courant de gaz génère une vibration acoustique dont la longueur d'onde est essentiellement constante.

7. Dispositif selon la revendication 6, caractérisé en ce que la cavité résonnante est un sifflet (6).

8. Dispositif selon la revendication 6 ou 7, caractérisé en ce qu'on prévoit un microphone (13) dont la sortie est reliée à l'entrée d'un circuit d'évaluation de la fréquence (14).

9. Dispositif selon les revendications 7 et 8, caractérisé en ce que le sifflet (6) est disposé dans une chambre (2) revêtue d'une matière (17) procurant une isolation acoustique, dans laquelle se trouve également le microphone (13).

10. Dispositif selon la revendication 9, caractérisé en ce que la chambre (12) contient, à titre de matière (17) procurant une isolation acoustique, de la laine de roche.

11. Dispositif selon l'une quelconque des revendications 6 à 10, caractérisé en ce que la fréquence de résonance de la cavité résonnante (6) peut être modifiée à l'aide d'un élément de réglage mécanique (8, 9).

12. Dispositif selon l'une quelconque des revendications 6 à 11, caractérisé en ce que la cavité résonnante (6) est syntonisée à une fréquence de résonance audible dans l'air d'au moins 1000 Hz.

13. Dispositif selon la revendication 12, caractérisé en ce que la cavité résonnante (6) est syntonisée à une fréquence de résonance audible dans l'air d'au moins 1500 Hz.
